# EUROPEAN PATENT APPLICATION

(11) **EP 3 115 113 A1**
(43) Date of publication of application: **11.01.2017**
(21) Application number: 15758131.5
(22) Date of filing: 06.03.2015
(51) Int. Cl.: B03C 3/47, B03C 3/09, B03C 3/40, B03C 3/70, F24F 1/00

(54) **ELECTROSTATIC PRECIPITATOR AND AIR CONDITIONER USING SAME**

(30) Priority: 07.03.2014 JP 2014045682; 07.03.2014 JP 2014045683
(71) Applicant: Fujitsu General Limited, Kanagawa 213-8502 (JP)
(72) Inventor: IWANO, Syun, Kawasaki-shi Kanagawa 213-8502 (JP); OKUNO, Hiroki, Kawasaki-shi Kanagawa 213-8502 (JP)
(74) Representative: Kreutzer, Ulrich
(86) International application number: PCT/JP2015/056636
(87) International publication number: WO 2015/133602

(57) **Abstract**

There is provided an electric dust collection device which can effectively capture fine particles while avoiding a pressure loss.

The electric dust collection device is provided with a charging electrode 73, a dust collection electrode 35, and a repulsive electrode 74. Along a flowing direction of an airflow, the dust collection electrode 35 is disposed downstream of the charging electrode 73, and the repulsive electrode 74 is disposed downstream of the dust collection electrode 35. The dust collection electrode 35 is formed of a conductive material which partitions a ventilation passage through the airflow pass in the flowing direction. The repulsive electrode 74 forms an electric barrier which has the same polarity as that of the charging electrode 73 with a posture that intersects the airflow in the flowing direction.

## Description

### Technical Field

The present invention relates to an electric dust collection device and an air conditioner using the same.

### Background Art

An electric dust collection device is provided with a discharging electrode (charging electrode) and a dust collection section. The discharging electrode performs discharging on an upstream side of an airflow with respect to the dust collection section. Dust in the airflow takes a charge as discharging is performed. The charged dust is adhered to the dust collection section which is made of a dust collection electrode in a shape of a flat board and a high-voltage electrode having high voltage. Such an electric dust collection device is disclosed in PTL 1.

### Citation List

### Patent Literature

PTL 1: Japanese Patent No. 3622600

### Summary of Invention

### Technical Problem

In the dust collection section, the dust collection electrode in a shape of a flat board and the high-voltage electrode are disposed in parallel to a flowing direction of the airflow. The dust collection electrode and the high-voltage electrode face each other, and an electric field is generated between the both electrodes. A route of the charged dust is bent by a Coulomb force which is received from the electric field generated between the dust collection electrode and the high-voltage electrode. The dust is adhered to the dust collection electrode. However, in such an electric dust collection device, while the high-voltage electrode is disposed to be close to the dust collection electrode, a path of the airflow which is partitioned by the dust collection electrode and the high-voltage electrode has to be sufficiently long in the flowing direction of the airflow. As a result, ventilation resistance increases. A technology for capturing fine particles which are called fine dust while avoiding an increase in the ventilation resistance, is necessary.

According to several aspects of the present invention, it is possible to provide an electric dust collection device which can realize decrease in ventilation resistance and efficiency of dust collection.

### Solution to Problem

An aspect of the present invention relates to an electric dust collection device which is provided with a charging electrode, a dust collection electrode, and a repulsive electrode. The charging electrode is disposed in an airflow, discharges to the airflow, and makes a material such as dust, in an airflow charged. The dust collection electrode is disposed downstream of the charging electrode along a flowing direction of the airflow, and is formed of a conductive material which partitions a ventilation passage of the airflow. The repulsive electrode is disposed downstream of the dust collection electrode along the flowing direction of the airflow, and forms an electric barrier having the same polarity as that of the charging electrode which has a posture that intersects the airflow in the flowing direction.

When discharging from the charging electrode is performed, fine particles, such as dust, in the airflow, are charged to certain polarity. The airflow passes through the dust collection electrode through a space (ventilation passage) through which the airflow flows. The ventilation passage is partitioned by the dust collection electrode. The charged fine particles pass through the dust collection electrode on the airflow. The charged fine particles collide with an electric barrier. Since the charged fine particles and the electric barrier have the same polarity, the charged fine particles rebound by the electric barrier. According to this, a travel speed of the fine particles decreases, a travel direction becomes reverse, and the charged fine particles are easily adhered to the dust collection electrode. In this manner, the fine particles, such as dust, are captured by the dust collection electrode. Since the electric barrier blocks a route of the fine particles, a straight travel of the fine particles is reliably obstructed. As a result, dust collection is more efficiently realized.

The electric dust collection device may further include a first insulator and a second insulator. The first insulator constitutes a part of the dust collection electrode, receives the airflow on a first surface, and supports the conductive material on a second surface which is on a side opposite to the first surface. The second insulator constitutes a part of the repulsive electrode, and supports a conductive material on a surface which faces the second surface of the first insulator. The repulsive electrode is disposed downstream of the dust collection electrode, and the conductive material on the repulsive electrode faces the conductive material on the dust collection electrode. In this manner, the conductive material of the dust collection electrode and the conductive material of the repulsive electrode are disposed between the first insulator and the second insulator. It is possible to prevent a user from directly coming into contact with the conductive material to which high voltage is supplied, from the outside.

The dust collection electrode may be formed of a mesh sheet, and have the conductive material on the second surface which is on the side opposite to the first surface that receives at least the airflow. It is possible to set a spread of an opening to be greater than a length of a flowing path of the airflow by mesh of the so-called mesh sheet. As a result, a pressure loss of the mesh sheet of the dust collection electrode is substantially suppressed. The electric dust collection device can effectively capture the fine particles while avoiding the pressure loss.

The repulsive electrode may be formed of a mesh sheet, and have a conductive material which forms the barrier along a surface which at least faces the conductive material of the dust collection electrode. Similarly, a pressure loss of the mesh sheet of the repulsive electrode is substantially suppressed. The electric dust collection device can effectively capture the fine particles while avoiding the pressure loss.

The mesh sheet of the dust collection electrode may be formed of an insulating material, and the insulating material may be disposed on the second surface of the dust collection electrode. The repulsive electrode is disposed downstream of the dust collection electrode, and the conductive material on the repulsive electrode faces the conductive material on the dust collection electrode. In this manner, the conductive material of the dust collection electrode is covered with an insulating material from the outside. It is possible to prevent a user from directly coming into contact with the conductive material to which high voltage is supplied, from the outside.

The mesh sheet of the repulsive electrode may be formed of an insulating material, and the insulating material may be disposed on the surface which is on the side opposite to the surface that faces the dust collection electrode in the repulsive electrode. In this manner, the conductive material of the dust collection electrode and the conductive material of the repulsive electrode are disposed between the insulating materials. It is possible to prevent a user from directly coming into contact with the conductive material to which high voltage is supplied, from the outside.

The dust collection electrode may be connected to a ground. When the fine particles are adhered to the dust collection electrode, electric charges of the fine particles move to the dust collection electrode. The electric charges flow to the ground. In this manner, formation of a potential having the same polarity as that of the charging electrode is avoided by the dust collection electrode. Even when an adhesion amount of the fine particles increases, new fine particles can be reliably adhered to the dust collection electrode. If an escape route of the electric charges is not provided in the dust collection electrode, the potential having the same polarity as that of the charging electrode is generated on the dust collection electrode as the adhesion amount of the electric charges increases, and adhesion of the fine particles is obstructed in accordance with a repulsive force having the same polarity.

It is desirable that the repulsive electrode faces the dust collection electrode at an equivalent interval. In this manner, it is possible to suppress deviation of distribution of the potential as much as possible by the electric barrier. As a result, the fine particles can be uniformly adhered onto the dust collection electrode. Moreover, it is possible to prevent discharging between the repulsive electrode and the dust collection electrode from being generated.

The electric dust collection device described above can be used being embedded in an air conditioner. In this manner, it is possible to realize an air cleaning function by the air conditioner. In addition to this, the electric dust collection device may be used being embedded in an air cleaner or a ventilator. The electric dust collection device may be used in a clean room.

### Advantageous Effects of Invention

According to the disclosed aspects described above, it is possible to realize efficiency of dust collection.

### Brief Description of Drawings

[Fig. 1] Fig. 1 is a schematic conceptual view illustrating a configuration of an air conditioner according to an embodiment of the present invention.
[Fig. 2] Fig. 2 is a schematic perspective view illustrating an external appearance of an indoor unit according to the embodiment.
[Fig. 3] Fig. 3 is a schematic perspective view illustrating a configuration of a main body of the indoor unit.
[Fig. 4] Fig. 4 is a schematic exploded perspective view illustrating a structure of the indoor unit.
[Fig. 5] Fig. 5 is a schematic enlarged perspective view illustrating a structure of an air filter.
[Fig. 6] Fig. 6 is a cross-sectional view along line A-A in Fig. 5.
[Fig. 7] Fig. 7 is an enlarged perpendicular cross-sectional view of the main body of the indoor unit.
[Fig. 8] Fig. 8 is a schematic enlarged cross-sectional view illustrating a principle of electric dust collection according to the present invention.
[Fig. 9] Fig. 9 is a schematic exploded perspective view illustrating a configuration of an air cleaner according to the embodiment of the present invention.
[Fig. 10] Fig. 10 is a schematic exploded perspective view illustrating the configuration of an air cleaner according to another embodiment.
[Fig. 11] Fig. 11 is a schematic exploded perspective view illustrating a configuration of a ventilator according to the embodiment of the present invention.
[Fig. 12] Fig. 12 is a schematic conceptual view illustrating a configuration of a clean room according to the embodiment of the present invention.

### Description of Embodiments

Hereinafter, an embodiment of the present invention will be described with reference to the attached drawings.

### (1) Configuration of Air Conditioner

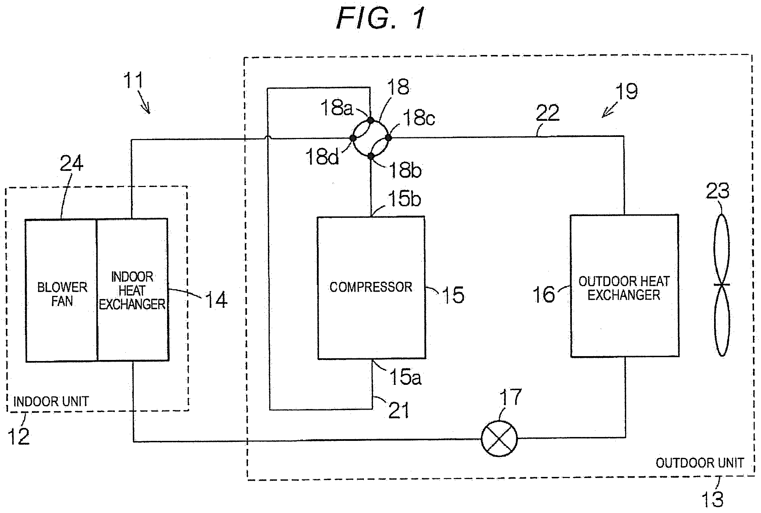

Fig. 1 is a schematic conceptual view illustrating a configuration of an air conditioner 11 according to the embodiment of the present invention. The air conditioner 11 is provided with an indoor unit 12 and an outdoor unit 13. The indoor unit 12 is installed in an indoor space in a building, for example. In addition to this, the indoor unit 12 may be installed in a space which corresponds to the indoor space. An indoor heat exchanger 14 is embedded in the indoor unit 12. A compressor 15, an outdoor heat exchanger 16, an expansion valve 17, and a four-way valve 18 are embedded in the outdoor unit 13. The indoor heat exchanger 14, the compressor 15, the outdoor heat exchanger 16, the expansion valve 17, and the four-way valve 18 forms a refrigerant circuit 19.

The refrigerant circuit 19 is provided with a first circulating path 21. The first circulating path 21 links a first port 18a and a second port 18b of the four-way valve 18 to each other. In the first circulating path 21, the compressor 15 is provided. An inlet pipe 15a of the compressor 15 is connected to the first port 18a of the four-way valve 18 via refrigerant piping. A gas refrigerant from the first port 18a is supplied to the inlet pipe 15a of the compressor 15. The compressor 15 compresses a low-pressure gas refrigerant until pressure thereof reaches predetermined pressure. A discharge pipe 15b of the compressor 15 is connected to the second port 18b of the four-way valve 18 via the refrigerant piping. The gas refrigerant from the discharge pipe 15b of the compressor 15 is supplied to the second port 18b of the four-way valve 18. The refrigerant piping may be a copper tube, for example.

The refrigerant circuit 19 is further provided with a second circulating path 22. The second circulating path 22 links a third port 18c and a fourth port 18d of the four-way valve 18 to each other. In the second circulating path 22, the outdoor heat exchanger 16, the expansion valve 17, and the indoor heat exchanger 14 are embedded in order from the third port 18c side. The outdoor heat exchanger 16 exchanges heat energy between the passing-through refrigerant and ambient air. The indoor heat exchanger 14 exchanges heat energy between the passing-through refrigerant and the ambient air. The second circulating path 22 may be formed of the refrigerant piping, such as a copper tube.

A blower fan 23 is embedded in the outdoor unit 13. The blower fan 23 ventilates for the outdoor heat exchanger 16. The blower fan 23 generates an airflow in accordance with rotation of an impeller, for example. The airflow goes through the outdoor heat exchanger 16. Flux of the going-through airflow is adjusted in accordance with a rotating speed per minute of the impeller.

A blower fan 24 is embedded in the indoor unit 12. The blower fan 24 ventilates for the indoor heat exchanger 14. The blower fan 24 generates an airflow in accordance with rotation of an impeller. Indoor air is sucked in the indoor unit 12 by an action of the blower fan 24. The indoor air exchanges heat with the refrigerant that goes through the indoor heat exchanger 14. The heat-exchanged cool or warm airflow is blown out of the indoor unit 12. Flux of the going-through airflow is adjusted in accordance with a rotating speed per minute of the impeller.

When the heating operation is performed by the refrigerant circuit 19, the four-way valve 18 connects the second port 18b and the third port 18c to each other, and connects the first port 18a and the fourth port 18d to each other. Therefore, the refrigerant having a high temperature and high pressure is supplied to the outdoor heat exchanger 16 from the discharge pipe 15b of the compressor 15. The refrigerant flows through the outdoor heat exchanger 16, the expansion valve 17, and the indoor heat exchanger 14 in order. The refrigerant radiates the heat to the air outside from the refrigerant by the outdoor heat exchanger 16. The pressure of the refrigerant is reduced until the pressure becomes low pressure by the expansion valve 17. The refrigerant of which the pressure is reduced absorbs the heat from the ambient air by the indoor heat exchanger 14. Cool air is generated. The cool air is blown out to the indoor space by an action of the blower fan 24.

When the heating operation is performed by the refrigerant circuit 19, the four-way valve 18 connects the second port 18b and the fourth port 18d to each other, and connects the first port 18a and the third port 18c to each other. The refrigerant having a high temperature and high pressure is supplied to the indoor heat exchanger 14 from the compressor 15. The refrigerant flows through the indoor heat exchanger 14, the expansion valve 17, and the outdoor heat exchanger 16 in order. Heat is radiated to the ambient air from the refrigerant by the indoor heat exchanger 14. Warm air is generated. The warm air is blown out of the indoor space in accordance with the action of the blower fan 24. The pressure of the refrigerant is reduced until the pressure becomes low pressure by the expansion valve 17. The refrigerant of which the pressure is reduced absorbs the heat from the ambient air by the outdoor heat exchanger 16. After this, the refrigerant returns to the compressor 15.

### (2) Configuration of Indoor Unit

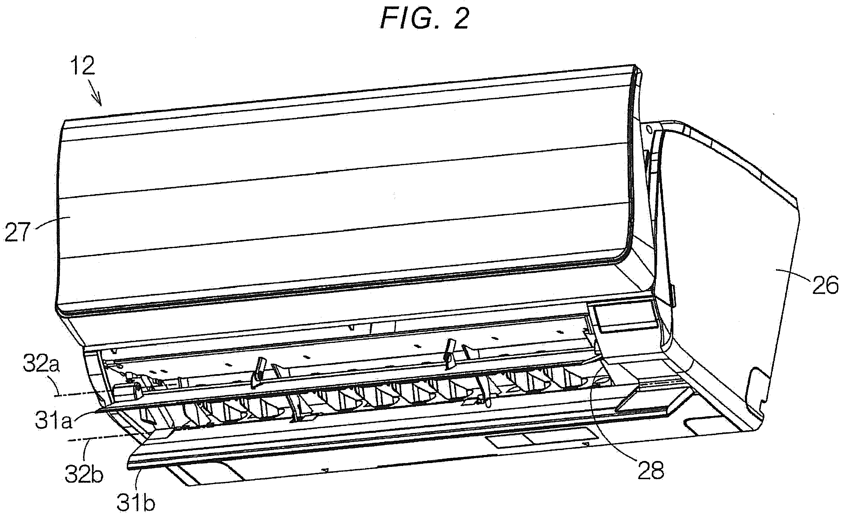

Fig. 2 is a schematic view illustrating an external appearance of the indoor unit 12 according to the embodiment. A main body 26 of the indoor unit 12 is covered with an outer panel 27. An air outlet 28 is formed on a lower surface of the main body 26. The air outlet 28 is open toward the inside of the room. The main body 26 can be fixed to an indoor wall surface, for example. The air outlet 28 blows out the cool or warm airflow which is generated by the indoor heat exchanger 14.

One pair of upper and lower wind direction plates 31a and 31b are disposed at a front and a rear parts in the air outlet 28. The upper and lower wind direction plates 31a and 31b can respectively rotate around horizontal shaft lines 32a and 32b. The upper and lower wind direction plates 31a and 31b can open and close the air outlet 28 in accordance with the rotation. In accordance with an angle of the upper and lower wind direction plates 31a and 31b, a direction of the blown-out airflow is changed.

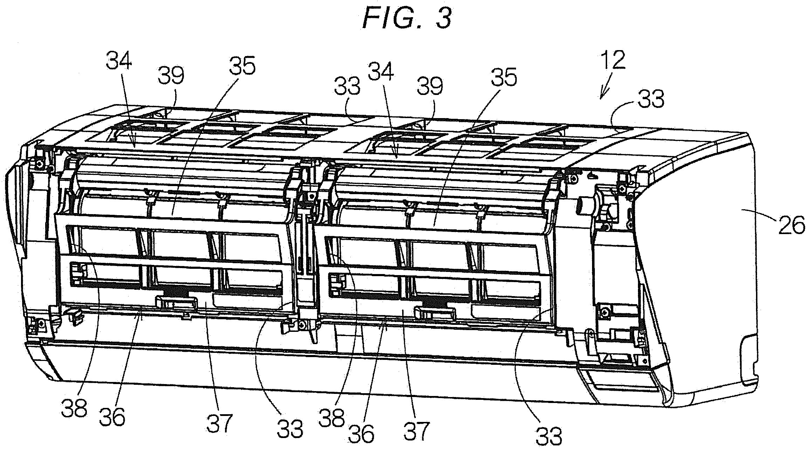

As illustrated in Fig. 3, a suction port 33 is formed in the main body 26. The suction port 33 is open on a front surface and an upper surface of the main body 26. The outer panel 27 can cover the suction port 33 on the front surface of the main body 26. The airflow which flows in the indoor heat exchanger 14 is taken from the suction port 33.

In the suction port 33, a plurality of air filter assemblies 34 having the same shape as each other are disposed across the suction port 33 in a longitudinal direction. The air filter assembly 34 is provided with an air filter 35 and a holding section 36. The air filter 35 is held by the holding section 36. The holding section 36 has a frame body 37. The holding section 36 is fixed to the main body 26 by the frame body 37. When the holding section 36 is set in the main body 26, the air filter 35 is disposed across the entire surface of the suction port 33.

In the frame body 37 of the holding section 36, a filter rail 38 is provided on a front side which holds a frame section of the air filter 35 which will be described later. In the main body 26 which corresponds to the filter rail 38 on the front side, a filter rail 39 is provided on a rear side. The filter rails 38 and 39 are provided along a perpendicular surface which is orthogonal to the horizontal shaft lines 32a and 32b to hold both left and right end sections of the air filter 35 to be slidable. The air filter 35 moves along the filter rails 38 and 39.

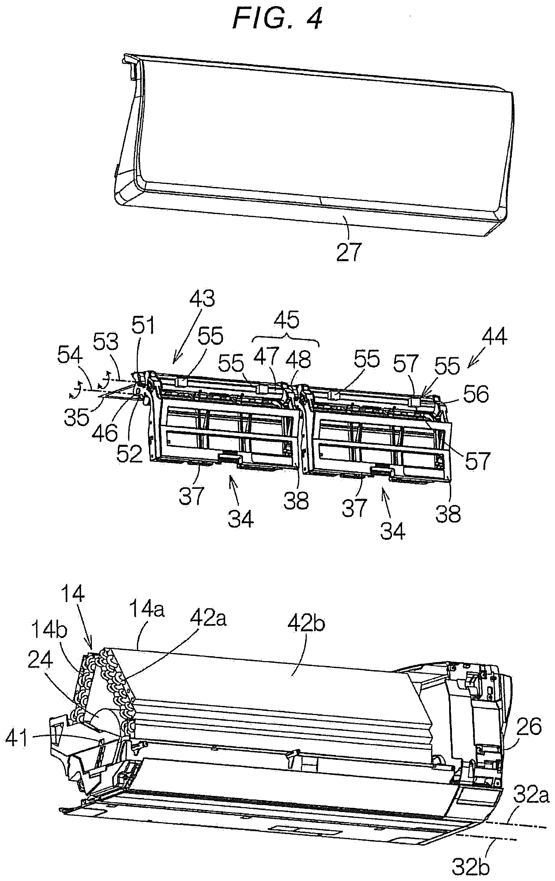

As illustrated in Fig. 4, the blower fan 24 is supported to be freely rotatable by the main body 26. As the blower fan 24, a cross flow fan is used, for example. The blower fan 24 rotates around a rotation shaft 41 which is parallel to the horizontal shaft lines 32a and 32b. The rotation shaft 41 of the blower fan 24 extends in the horizontal direction when the main body 26 is installed. The blower fan 24 is disposed in parallel to the air outlet 28. A driving force around the rotation shaft 41 is transferred from a driving source (not illustrated) to the blower fan 24. The driving source is supported by the main body 26. The airflow passes through the indoor heat exchanger 14 in accordance with the rotation of the blower fan 24. As a result, a cool or warm airflow is generated. The cool or warm airflow is blown out of the air outlet 28.

The indoor heat exchanger 14 is provided with a front side body 14a and a rear side body 14b. The front side body 14a faces the blower fan 24 from the front side of the blower fan 24. The rear side body 14b faces the blower fan 24 from the rear side of the blower fan 24. The front side body 14a and the rear side body 14b are linked to each other at an upper end. The front side body 14a and the rear side body 14b have a refrigerant tube 42a. The refrigerant tube 42a reciprocates in the horizontal direction. In other words, the refrigerant tube 42a extends in parallel to the horizontal shaft lines 32a and 32b, is folded back by left and right ends when the main body 26 is viewed from the front surface, extends in parallel to the horizontal shaft lines 32a and 32b again, and is folded back by the left and right ends when the main body 26 is viewed from the front surface again, and these operations are repeated. The refrigerant tube 42a constitutes a part of the second circulating path 22. A plurality of radiating fins 42b are combined with the refrigerant tube 42a. The radiating fins 42b widen in parallel to each other while being orthogonal to the horizontal shaft lines 32a and 32b. The refrigerant tube 42a and the radiating fin 42b can be formed of a metal material, such as copper or aluminum. Heat exchange is realized between the refrigerant and the airflow through refrigerant tube 42a and the radiating fin 42b.

As illustrated in Fig. 4, the air filter assembly 34 includes a filter cleaning unit 43 and an electric dust collection unit (electric dust collection device) 44. The filter cleaning unit 43 is provided with an upper dust box 45 and a lower dust box 46. The upper dust box 45 and the lower dust box 46 include the frame body 37 of the holding section 36. The upper dust box 45 is disposed on the front surface side of the air filter 35. The upper dust box 45 has a cover 47. The cover 47 is provided to cover a dust storage section 49 of a box main body 48. The lower dust box 46 is disposed on the rear surface side of the air filter 35. The upper dust box 45 and the lower dust box 46 are disposed in the horizontal direction with respect to the air filter 35. When cleaning the air filter 35 in general, the dust on the front surface of the air filter 35 is collected to the box main body 48 of the upper dust box 45, and the dust on the rear surface of the air filter 35 is collected to the lower dust box 46.

The filter cleaning unit 43 is provided with a first follower gear 51 and a second follower gear 52. The first follower gear 51 is attached to the upper dust box 45. The first follower gear 51 rotates around a horizontal shaft 53. The first follower gear 51 rotates a cleaning brush 66 which will be described later in the upper dust box 45. Teeth of the first follower gear 51 are partially exposed from an outer surface of the upper dust box 45. Similarly, the second follower gear 52 is attached to the lower dust box 46. The second follower gear 52 rotates around the horizontal shaft 54. The second follower gear 52 is provided on both end sides of the lower dust box 46, and drives the air filter 35 which will be described later. Teeth of the second follower gear 52 are partially exposed from an outer surface of the lower dust box 46. When the air filter assembly 34 is set in the main body 26, the first follower gear 51 meshes with a first driving gear (not illustrated) which is loaded on the main body 26. Similarly, the second follower gear 52 meshes with a second driving gear (not illustrated) which is loaded on the main body 26. Driving sources (not illustrated), which are called electric motors, are independently linked to each driving gear. The first follower gear 51 and the second follower gear 52 independently rotate in accordance with the driving force which is supplied from each driving source.

The electric dust collection unit 44 is provided with an ionizer 55, a dust collection electrode which will be described later, and a repulsive electrode which will be described later. The ionizer 55 is provided to the upper dust box 45. A housing 56 of the ionizer 55 may be provided to be integrated with the cover 47 of the upper dust box 45. An opening 57 is vertically formed in the housing 56 of the ionizer 55. Ion and ozone are discharged from the opening 57. The discharged ion and ozone are scattered to a space between the outer panel 27 and the air filter 35. The ionizer 55 is electrically connected to a control section which is not illustrated in the main body 26 by wiring (not illustrated). The wiring of the ionizer 55 has an electric contact point which can be attached and detached, and when attaching and detaching the air filter assembly 34, the wiring is combined and divided. Operating power is supplied to the ionizer 55 through the wiring.

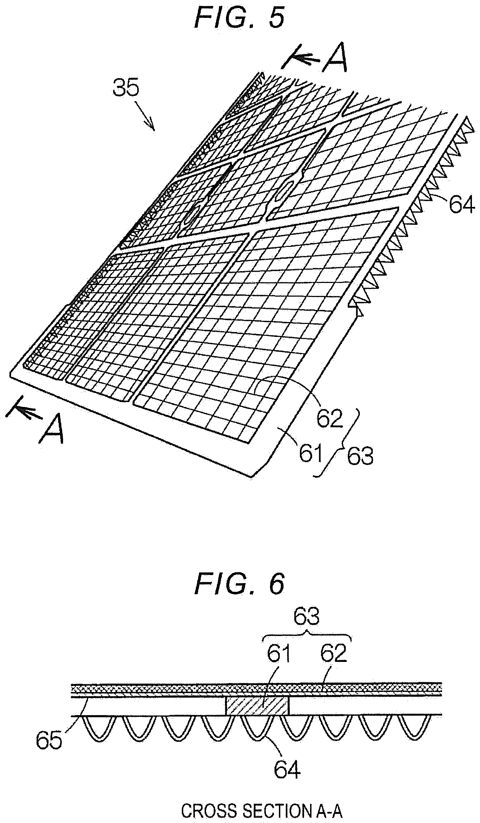

As illustrated in Fig. 5, the air filter 35 is provided with a frame 61 and a mesh sheet 62. The mesh sheet 62 is configured by assembling fibers (resin fibers) of polyethylene terephthalate in a shape of a lattice, for example. The mesh sheet 62 is supported by the frame 61. The frame 61 has a function of holding a shape of the mesh sheet 62. The frame 61 is formed of a resin material (for example, polypropylene). The frame 61 and the mesh sheet 62 constitute a first insulator 63. Mesh of the mesh sheet 62 is provided to intersect the airflow, and partitions a ventilation passage.

A rack 64 is formed in the frame 61 of the air filter 35. The rack 64 is provided in one pair of opposing frame sections of the frame 61. The rack 64 meshes with a pinion (not illustrated) which is accommodated in the lower dust box 46. The pinion is linked to the second follower gear 52. The rotation of the second follower gear 52 is transferred to the pinion. In this manner, in accordance with the rotation of the second follower gear 52, the air filter 35 moves back and forth along the filter rails 38 and 39. The air filter 35 relatively moves with respect to the upper dust box 45 and the lower dust box 46.

As illustrated in Fig. 6, a film 65 of a conductive material is formed on a surface (rear surface) which becomes a downstream side with respect to the airflow of the air filter 35. As the conductive material, a metal material, such as aluminum, can be used, for example. The film 65 is layered on a front surface of the mesh sheet 62 on a surface on a repulsive electrode 74 side which will be described later of the air filter 35. As a method for forming the film 65, a sputtering method may be used, for example. The ventilation passage which is partitioned in a shape of a lattice by the mesh sheet 62 is ensured as it is. An insulating material is maintained on an entire surface (front surface) on an indoor side of the air filter 35. The film 65 is connected to a ground of the main body 26. When this connection is performed, the electric contact point (not illustrated) which comes into contact with a part of the film 65 may be formed in the main body 26. A potential of the film 65 may be dropped to the ground from the contact point. The electric contact point which comes into contact with the film 65 may be formed in the frame body 37 of the holding section 36, and in this case, the wiring which extends from the contact point of the frame body 37 may be connected to the contact point on the main body 26.

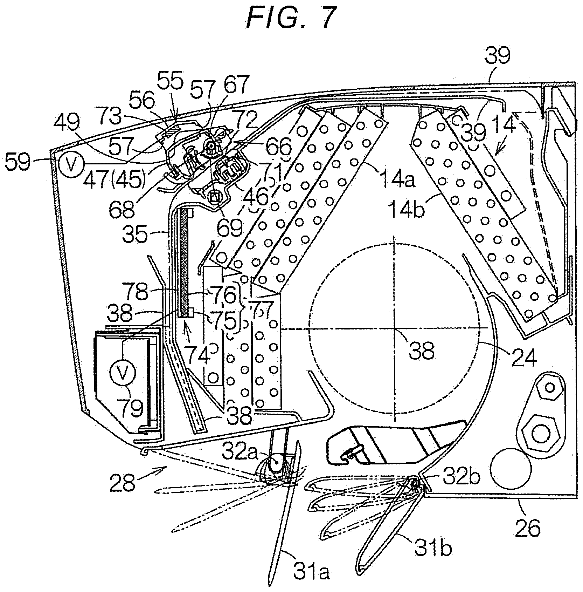

As illustrated in Fig. 7, the filter cleaning unit 43 is provided with the cleaning brush 66. The cleaning brush 66 is accommodated in the upper dust box 45. The cleaning brush 66 is provided with a brush seat 67. The brush seat 67 can rotate around a horizontal shaft 68 by the driving force from the first follower gear 51. Brush bristles 69 are disposed across a predetermined range of a center angle on a cylindrical surface of the brush seat 67. A range of implanted bristles of the brush bristles 69 shows a spread which cuts across the air filter 35 in a shaft direction of the brush seat 67. The cleaning brush 66 brings the brush bristles 69 into contact with the air filter 35 at a predetermined rotating position, and allows the brush bristles 69 to be disengaged from the air filter 35 at a position other than the rotating position. When the air filter 35 moves in a direction along a perpendicular surface which is orthogonal to the horizontal shaft lines 32a and 32b in a state where the brush bristles 69 come into contact with the air filter 35, the dust which is adhered to the front surface of the air filter 35 can be entangled around the brush bristles 69.

The filter cleaning unit 43 is provided with a brush receiver 71. The brush receiver 71 is accommodated in the lower dust box 46. The brush receiver 71 has a receiving surface 72. The receiving surface 72 faces the cleaning brush 66. When the brush bristles 69 come into contact with the air filter 35, the receiving surface 72 puts the air filter 35 between the receiving surface 72 and the brush bristles 69. In addition to this, the brush bristles may be implanted on the receiving surface 72.

The ionizer 55 of the electric dust collection unit 44 includes a charging electrode 73. The ionizer 55 receives the supply of the power having high voltage from a high-voltage power source for a charging electrode 59 of the main body 26, and discharges the power to the air. Ion and ozone are generated by discharging. The ion and ozone which are generated in this manner are discharged from the opening 57 of the ionizer 55.

The electric dust collection unit 44 is further provided with the repulsive electrode 74. The repulsive electrode 74 may generate an electric field which repulses charging particles. In order to prevent an increase in ventilation resistance, the repulsive electrode 74 may have a structure which is similar to that of the air filter 35. In other words, the repulsive electrode 74 is provided with a frame 75 and a mesh sheet 76. The mesh sheet 76 is woven by the fibers (resin fibers), such as polyethylene terephthalate. The mesh sheet 76 is supported by the frame 75. The frame 75 has a function of holding a shape of the mesh sheet 76. The frame 75 is formed of polypropylene, for example. The frame 75 and the mesh sheet 76 constitute a second insulator 77. Mesh of the mesh sheet 76 is provided to intersect the airflow, and partitions the ventilation passage.

A surface on the dust collection electrode side (here, the air filter 35 side) of the repulsive electrode 74 is covered with a film 78 of the conductive material. As the conductive material, a metal material, such as aluminum, can be used, for example. The film 78 is layered on a front surface of the second insulator 77 on a surface on the charging electrode 73 side of the repulsive electrode 74. As a method for forming the film 78, a sputtering method may be used, for example. The ventilation passage which is partitioned is ensured as it is. An insulating material (second insulator 77) is maintained on one surface on a rear surface of the repulsive electrode 74.

The repulsive electrode 74 may be fixed on the heat exchanger side of the filter rail 38 which is provided to be integrated with the lower dust box 46. A space is formed between the film 78 on the front surface and the film 65 of the air filter 35. In other words, a distance between the film 78 and the film 65 is ensured. Here, the film 78 faces the film 65 at an equivalent interval. In this manner, the electric dust collection unit 44 uses the air filter 35 as the dust collection electrode.

The film 78 is connected to a high-voltage power source for a charging electrode 79 of the main body 26. Wiring which connects the repulsive electrode 74 and the high-voltage power source for a charging electrode 79 has an electric contact point which can be attached and detached. When attaching and detaching the air filter assembly 34, the wiring is combined and divided. High voltage is supplied to the film 78 through the wiring. Here, voltage having the same polarity as that of the charging electrode 73 is supplied to the film 78 of the repulsive electrode 74. Therefore, the high voltage is received, and the repulsive electrode 74 forms an electric barrier having the same polarity as that of the charging electrode 73 along the film 78 on the front surface.

### (3) Operation of Indoor Unit

When the blower fan 24 operates, an airflow is generated toward the air outlet 28 from the suction port 33 in the main body 26. The air which is sucked from the suction port 33 passes through the air filter 35 and passes through the indoor heat exchanger 14. When a cooling operation is performed, the air is cooled by the indoor heat exchanger 14 and blown out of the air outlet 28. When a heating operation is performed, the air is heated by the indoor heat exchanger 14 and blown out of the air outlet 28. When the airflow passes through the air filter 35, dust of which the size is greater than that of the mesh of the mesh sheet 62 cannot pass through the mesh. The large dust is captured on the front surface of the air filter 35. The fine particles, such as dust of which the size is smaller than that of the mesh, are adhered to the rear surface of the air filter 35 by a principle of electric dust collection which will be described later. In this manner, the dust or the like is removed from the airflow which flows toward the indoor heat exchanger 14. A clean airflow flows into the indoor heat exchanger 14. The cool or warm airflow of the clean air is blown out of the air outlet 28.

An operation of the filter cleaning unit 43 when cleaning of the air filter 35 is performed will be described. The brush bristles 69 of the cleaning brush 66 come into contact with the front surface of the air filter 35 in accordance with the rotation operation of the brush seat 67. At this time, the rear surface of the air filter 35 is received by the receiving surface 72 of the brush receiver 71. The air filter 35 is nipped between the brush bristles 69 and the receiving surface 72. When the second follower gear 52 is driven, the air filter 35 moves back and forth along the filter rails 38 and 39. In accordance with the movement of the air filter 35, the brush bristles 69 trace the front surface of the air filter 35. In this manner, the brush bristles 69 entangle large dust from the front surface of the air filter 35. The entangled dust is collected to the upper dust box 45. Since the electric charges are removed by an action of the ground on the rear surface of the air filter 35, the fine particles drop from the rear surface of the air filter 35 as the receiving surface 72 and the air filter 35 come into contact with each other. The dropped fine particles are collected to the lower dust box 46.

### (4) Principle of Electric Dust Collection

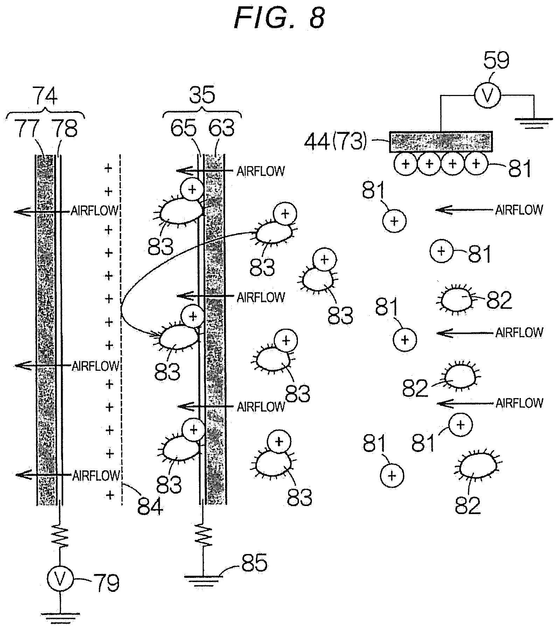

As illustrated in Fig. 8, in the airflow which is generated by the blower fan 24, the charging electrode 73, the air filter (dust collection electrode) 35, and the repulsive electrode 74 are disposed. Along the flowing direction of the airflow, the air filter 35 is disposed downstream of the charging electrode 73, and the repulsive electrode 74 is disposed downstream of the air filter 35. The charging electrode 73 performs discharging to the airflow. Here, positive ions 81 are generated in the airflow by the discharging. The positive ions 81 are adhered to fine particles 82, such as dust, in the airflow. In this manner, the fine particles 82 positively take a charge (hereinafter, the charged fine particles are referred to as "charged fine particles 83").

When high voltage is supplied to the film 78 of the repulsive electrode 74, the front surface of the mesh sheet 76 of the repulsive electrode 74 positively takes a charge. The positively charged mesh sheet 76 forms an electric barrier 84 having a posture which intersects the airflow in the flowing direction. Here, the electric barrier 84 is orthogonal to the flowing direction of the airflow. The electric barrier 84 is continuous along the front surface of the mesh sheet 76. Here, the electric barrier 84 has the same polarity as that of the charging electrode 73, that is, positive polarity.

The airflow passes through a region which is partitioned by the mesh of the mesh sheet 62. The charged fine particles 83 which are on the airflow pass through the mesh sheet 62 of the air filter 35 since the charged fine particle 83 are smaller than the mesh of the mesh sheet 62. The charged fine particles 83 collide with the electric barrier 84. The charged fine particles 83 and the electric barrier 84 have the same polarity as each other. Therefore, the charged fine particles 83 rebound by the electric barrier 84. According to this, a travel speed of the charged fine particles 83 decreases, a travel direction becomes reverse, and the charged fine particles 83 move toward the air filter 35 and are adhered to the film 65.

Since the dust collection electrode and the repulsive electrode are formed in a shape of a mesh sheet in the embodiment, the electrode may not be provided in the longitudinal direction with respect to the flowing path of the airflow. For this reason, without making a pressure loss due to the dust collection device high, it is possible to remove the dust.

The film 65 of the air filter 35 is connected to a ground 85. When the charged fine particles 83 are adhered to the film 65 of the air filter 35, the electric charges are exchanged between the charged fine particles 83 and the ground 85. A state where the charged fine particles 83 are charged is released. In this manner, it is possible to prevent the potential of the air filter 35 from becoming a potential having the same polarity as that of the charging electrode 73. Even when an adhesion amount of the charged fine particles 83 increases, new charged fine particles 83 can be reliably adhered to the air filter 35. In addition, here, the polarity of the air filter 35 which functions as the dust collection electrode is considered as the ground, but the polarity which allows the charged fine particles 83 to be adhered may be employed, and a polarity which is reverse to that of the charged fine particles 83, that is, a negative polarity, may be employed.

It is desirable that the film 78 of the repulsive electrode 74 faces the film 65 of the air filter 35 at an equivalent interval. In this case, deviation of distribution of the potential is suppressed by the electric barrier 84. As a result, the charged fine particles 83 can be uniformly adhered onto the air filter 35. Here, when the distance between the film 78 and the film 65 is not constant, there is a possibility that a spark is generated at a close location. However, as the interval is the equivalent interval as described above, it is possible to prevent a spark between the film 78 of the repulsive electrode 74 and the film 65 of the air filter 35 from being generated.

Here, in the air filter 35, the first insulator 63 receives the airflow on the front surface (first surface), and supports the film 65 on the rear surface (second surface on a side which is opposite to a first surface). Similarly, the second insulator 77 supports the film 78 on a surface which faces the film 65 of the air filter 35 in the repulsive electrode 74. In this manner, the film 78 on the repulsive electrode 74 faces the film 65 on the air filter 35. The film 65 of the air filter 35 and the film 78 of the repulsive electrode 74 are disposed between the first insulator 63 and the second insulator 77. Accordingly, it is possible to prevent a user from directly coming into contact with the film 78 to which high voltage is supplied, from the outside. In addition, unevenness of the surface (film 65) which is covered with a metal material is smaller than that of the front surface of the insulator (first insulator 63) which is made of a resin material. For this reason, as a surface to which the charged fine particles 83 is adhered is considered as the repulsive electrode 74 side, cleaning of the air filter 35 becomes easy.

In addition, an example in which the positive ions are discharged from the ionizer 55 is illustrated in Fig. 8, and as another embodiment, negative ions may be discharged. In this case, the polarity of the repulsive electrode 74 may be a negative polarity, and the polarity of the dust collection electrode (air filter 35) may be a positive polarity or a ground.

### (5) Configuration of Air Cleaner

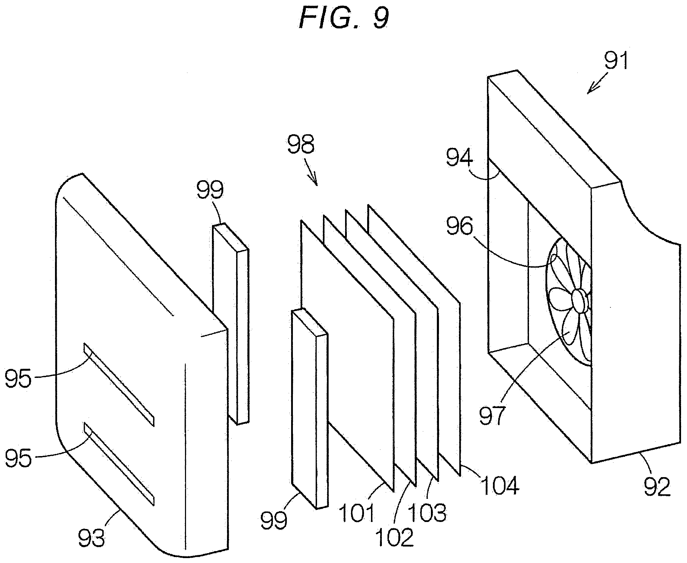

Fig. 9 is a schematic view illustrating a configuration of an air cleaner 91 according to the embodiment of the present invention. The air cleaner 91 is provided with a main body 92 and a front cover 93. The front cover 93 is coupled to the front surface of the main body 92. A storage space 94 is partitioned in the main body 92. The storage space 94 is blocked by the front cover 93. A front ventilation port 95 which is linked to the storage space 94 is formed in the front cover 93.

In the storage space 94, a rear ventilation port 96 is formed on a wall surface which faces the front cover 93. A blower fan 97 is disposed in the rear ventilation port 96. When the blower fan 97 operates, the air is taken in the storage space 94 from the front ventilation port 95. The air flows into the rear ventilation port 96 from the storage space 94. The air is discharged to the outside from the rear ventilation port 96. In this manner, an airflow is generated toward the rear ventilation port 96 from the front ventilation port 95 in the storage space 94.

An electric dust collection unit (electric dust collection device) 98 is stored in the storage space 94. The electric dust collection unit 98 is provided with a plurality of charging electrodes 99 on a windward side. The charging electrode 99 may be longitudinally formed along left and right wall surfaces of the storage space 94. The airflow flows in the space between the charging electrodes 99. The fine particles, such as dust, in the airflow, are charged to have a certain polarity by an action of the charging electrode 99.

The electric dust collection unit 98 is provided with a first air filter 101, a first repulsive electrode 102, a second air filter 103, and a second repulsive electrode 104. The first air filter 101 and the second air filter 103 may be configured similarly to the above-described air filter 35. In other words, a film of a conductive material is formed on the rear surface of the first insulator. The film is connected to the ground. The mesh of the mesh sheet is provided to intersect the airflow, and partitions the ventilation passage. Similarly, the first repulsive electrode 102 and the second repulsive electrode 104 may be configured similarly to the above-described repulsive electrode 74. In other words, a film of a conductive material is formed on the front surface of the second insulator. The high-voltage power source is connected to the film. The mesh of the mesh sheet is provided to intersect the airflow, and partitions the ventilation passage. In the storage space 94, the airflow passes through the charging electrode 99, the first air filter 101, the first repulsive electrode 102, the second air filter 103, and the second repulsive electrode 104 in order. The film of the first repulsive electrode 102 faces the film of the first air filter 101 at an equivalent interval. Similarly, the film of the second repulsive electrode 104 faces the film of the second air filter 103 at an equivalent interval. Here, the first repulsive electrode 102 may function as a charging electrode with respect to the second repulsive electrode 104. Specifically, not only generating an electric barrier by the first repulsive electrode 102, voltage which generates positive ions in the airflow by discharging to the airflow from the first repulsive electrode 102 may be applied. In addition to this, a charging electrode may be further disposed between the first repulsive electrode 102 and the second air filter 103. According to the above-described principle of electric dust collection, the fine particles, such as dust, are captured by the first air filter 101 and the second air filter 103 in the electric dust collection unit 98. In this manner, as a plurality of dust collection electrodes and repulsive electrodes are disposed with respect to the airflow, it is possible to further improve efficiency of dust collection. In the air cleaner 91, the filter cleaning unit 43 may be assembled to the first air filter 101 similarly to the description above.

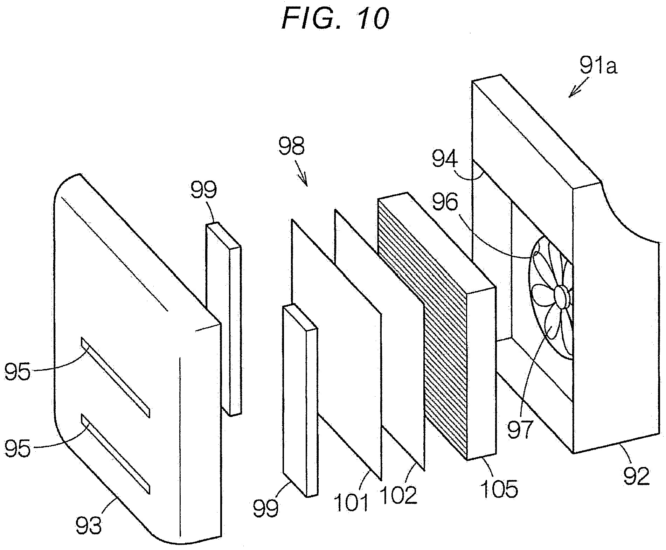

As illustrated in Fig. 10, in an air cleaner 91a, a HEPA filter 105 may be used instead of the second air filter 103 and the second repulsive electrode 104. The HEPA filter 105 can capture the fine particles which pass through the first air filter 101 without charging. The electric dust collection unit 98 can function as a prefilter of the HEPA filter 105. In this case, as the fine particles are captured by the prefilter, compared to a case where the HEPA filter 105 independently captures the fine particles, it is possible to decrease frequency of exchange of the HEPA filter 105.

### (6) Configuration of Ventilator

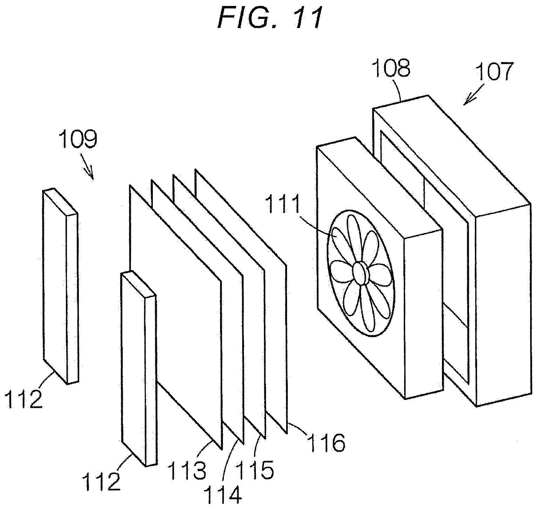

Fig. 11 is a schematic view illustrating a configuration a ventilator 107 according to the embodiment of the present invention. The ventilator 107 is provided with a housing 108. An electric dust collection unit (electric dust collection device) 109 and a blower fan 111 are accommodated in the housing 108. The electric dust collection unit 109 includes a charging electrode 112, a first air filter 113, a first repulsive electrode 114, a second air filter 115, and a second repulsive electrode 116. The charging electrode 112, the first air filter 113, the first repulsive electrode 114, the second air filter 115, and the second repulsive electrode 116 function similarly to the description above. When the blower fan 111 operates, the airflow passes through the charging electrode 112, the first air filter 113, the first repulsive electrode 114, the second air filter 115, and the second repulsive electrode 116. The fine particles in the airflow are captured by the first air filter 113 and the second air filter 115. The ventilator 107 may be installed in an air duct which links the inside and the outside of the room to each other. When the outer air is introduced, it is possible to capture the fine particles, such as dust, in the air.

### (7) Configuration of Clean Room

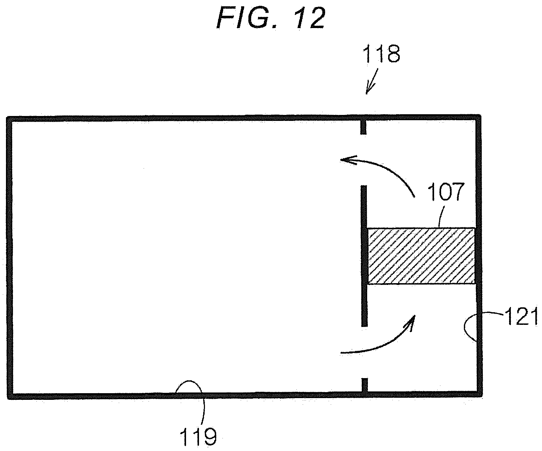

Fig. 12 is a schematic view illustrating a configuration a clean room 118 according to the embodiment of the present invention. The inside of a room 119 is configured of a sealed space. An air duct 121 is connected to the inside of a room 119. The air duct 121 is open at a first position of the inside of a room 119, and is open at a second space which is apart from the first position. The above-described ventilator 107 may be assembled to the inside of the air duct 121. The air circulates through the air duct 121. Every time circulation is performed, the air is cleaned by the ventilator 107.

## Claims

1. An electric dust collection device, comprising:
a charging electrode which is disposed in an airflow, discharges to the airflow, and makes a material in an airflow charged;
a dust collection electrode which is disposed downstream of the charging electrode along a flowing direction of the airflow, and is formed of a conductive material which partitions a ventilation passage of the airflow; and
a repulsive electrode which is disposed downstream of the dust collection electrode along the flowing direction of the airflow, and forms an electric barrier having the same polarity as that of the charging electrode which has a posture that intersects the airflow in the flowing direction.

2. The electric dust collection device according to Claim 1, further comprising:
a first insulator which constitutes a part of the dust collection electrode, receives the airflow on a first surface, and supports the conductive material on a second surface which is on a side opposite to the first surface; and
a second insulator which constitutes a part of the repulsive electrode, and supports a conductive material on a surface which faces the second surface of the first insulator.

3. The electric dust collection device according to Claim 1,
wherein the dust collection electrode is formed of a mesh sheet, and has the conductive material on the second surface which is on the side opposite to the first surface that receives at least the airflow.

4. The electric dust collection device according to Claim 3,
wherein the repulsive electrode is formed of a mesh sheet, and has a conductive material which forms the barrier along a surface which at least faces the conductive material of the dust collection electrode.

5. The electric dust collection device according to Claim 4,
wherein the mesh sheet of the dust collection electrode is formed of an insulating material, and the insulating material is disposed on the second surface of the dust collection electrode.

6. The electric dust collection device according to Claim 5,
wherein the mesh sheet of the repulsive electrode is formed of an insulating material, and the insulating material is disposed on the surface which is on the side opposite to the surface that faces the dust collection electrode in the repulsive electrode.

7. The electric dust collection device according to any one of Claims 1 to 6,
wherein the dust collection electrode is connected to a ground.

8. The electric dust collection device according to any one of Claims 1 to 7,
wherein the repulsive electrode faces the dust collection electrode at an equivalent interval.

9. An air conditioner, comprising:
the electric dust collection device according to any one of Claims 1 to 8.
